# EUROPÄISCHE PATENTANMELDUNG

(11) **EP 0 758 748 A2**
(43) Veröffentlichungstag der Anmeldung: **19.02.1997**
(21) Anmeldenummer: 96250171.4
(22) Anmeldetag: 09.08.1996
(51) Int. Cl.: G01P 3/66

(54) **Messvorrichtung zum berührungslosen Bestimmen des zurückgelegten Weges und der Geschwindigkeit von auf einer Fahrstrecke bewegten Elementen**

(30) Priorität: 14.08.1995 DE 19530892
(71) Anmelder: MANNESMANN Aktiengesellschaft, 40213 Düsseldorf (DE)
(72) Erfinder: Hoene, Albrecht, Dr.-Ing., 63322 Rödermark (DE)
(74) Vertreter: Presting, Hans-Joachim, Dipl.-Ing.

(57) **Zusammenfassung**

Die Erfindung betrifft eine Meßvorrichtung zum berührungslosen Bestimmen des zurückgelegten Weges und der Geschwindigkeit von entlang einer Fahrstrecke bewegten Elementen, insbesondere von berührungslos angetriebenen Schienenfahrzeugen in fördertechnischen Anlagen, mit zumindest einem Meßwertaufnehmer und einem Positionsgeber, von denen jeweils einer an der Fahrstrecke und einer an dem Element angeordnet sind und einer Auswerteeinheit zur Bestimmung der Weges aus den Signalen des Meßwertaufnehmers und der Geschwindigkeit aus den zeitlichen Veränderungen der Wegsignale.

Um eine Meßvorrichtung zum berührungslosen Bestimmen des zurückgelegten Weges und der Geschwindigkeit von entlang einer Fahrstrecke bewegten Elementen zu schaffen, die eine hohe Auflösung aufweist und insbesondere geeignet ist für berührungslos angetriebene Schienenfahrzeuge, wird vorgeschlagen, daß der Meßwertaufnehmer (8) als Ultraschallwegmesser ausgebildet ist, der im wesentlichen aus einem in Bewegungsrichtung (B) des bewegten Elements (Schienenfahrzeug 2) ausgerichteten Rohr (10) aus magnetostriktivem Material, einem an einem Ende des Rohres (10) angeordneten Impulsgeber (12), einem an einem Ende des Rohres (10) angekoppelten Ultraschallaufnehmer (13), sowie aus einer Meßschaltung (14) zur Ermittlung der Position des Positionsgebers (9, 9') als Funktion des zeitlichen Abstandes zwischen dem Auftreten eines elektrischen Impulses des Impulsgebers (12) und dem Empfang von einer an der Position des Zusammentreffens der Felder des elektrischen Impulses und des Positionsgebers (9, 9') durch Veränderung der Kristallstruktur des magnetostriktiven Materials erzeugten Ultraschallwelle gebildet ist, daß die Positionsgeber (9, 9') als Magnete ausgebildet sind und daß das Rohr (10) eine wirksame Meßlänge (c) aufweist, die größer ist als der Abstand (a) zweier benachbarter Positionsgeber (9, 9').

## Beschreibung

Die Erfindung betrifft eine Meßvorrichtung zum berührungslosen Bestimmen des zurückgelegten Weges und der Geschwindigkeit von auf einer Fahrstrecke bewegten Elementen gemäß dem Oberbegriff des Anspruches 1.

Aus der DE 31 47 819 C2 ist eine Einrichtung für die berührungslose und elektrische Messung des zurückgelegten Weges und der Geschwindigkeit eines Körpers, der gegenüber einer ortsfesten Schiene bewegt wird, bekannt. Die Schiene ist ferromagnetisch und weist quer zur Bewegungsrichtung des Körpers ausgerichtete Nuten auf, die in Bewegungsrichtung gesehen aufeinanderfolgend und mit gleichem Abstand zueinander angeordnet sind. Die Schiene ist Bestandteil eines synchronen oder asynchronen Langstatorlinearmotors, dessen Nuten zur Aufnahme der Wanderfeldwicklungen dienen. An dem bewegten Körper ist ein Magnet angeordnet, der in der Schiene einen quer zur Bewegungsrichtung des Körpers gerichteten Magnetfluß erzeugt. Außerdem ist an dem bewegten Körper ein Meßwertaufnehmer mit einem elektronischen Meßwandler angeordnet, der die von der Nutung der Schiene hervorgerufene Modulation des Magnetflusses erfaßt. Das Meßsignal des Meßwandlers ist im wesentlichen sinusförmig. Mittels einer Auswerteeinheit wird dieses Meßsignal in Taktimpulse umgewandelt, wobei jeder Taktimpuls einer erfaßten Nut entspricht. Die Taktsignale werden in einer Auswerteeinheit gezählt. Anhand der Anzahl der Taktsignale kann bei bekanntem Abstand der benachbarten Nuten zueinander der zurückgelegte Weg und somit die Position sowie die Geschwindigkeit durch Differentiation des Wegsignals bestimmt werden.

Diese Meßvorrichtung ist zwar geeignet zum berührungslosen Messen der Position eines bewegten Körpers, jedoch ist die Genauigkeit des Positionssignals direkt abhängig von dem Abstand der Nuten in der Schiene. Eine Erhöhung der Genauigkeit des Positionssignals ist nur durch Erhöhung der Anzahl der Meßwertaufnehmer bzw. durch Verringerung des Abstandes der Nuten der Schienen zueinander möglich. Eine Erhöhung der Anzahl der Meßwertaufnehmer führt jedoch dazu, daß die Ausfallwahrscheinlichkeit der gesamten Meßeinrichtung überproportional zunimmt.

Des weiteren ist aus der EP 0 149 745 B1 eine Ultraschall-Meßvorrichtung bekannt, mit der die Position eines bewegbaren Körpers entlang eines linearen Meßwertaufnehmers bestimmt werden kann. Der Meßwertaufnehmer besteht im wesentlichen aus einem Rohr aus magnetostriktivem Material, einem an einem Ende des Rohres angeordneten Impulsgenerator, einem ebenfalls an einem Ende des Rohres angeordneten Ultraschallaufnehmer sowie einer Meßschaltung zur Ermittlung der Position des beweglichen Körpers in Abhängigkeit der Laufzeit eines durch Zusammentreffen des magnetischen Feldes des elektrischen Impulses und des Positionsmagnets in dem Rohr erzeugten Ultraschallwelle. Die Erzeugung der Ultraschallwelle in dem Rohr erfolgt durch die sogenannte Magnetostriktion, d.h., daß an der Stelle, an dem das magnetische Feld des Positionsmagnets und das des elektrischen Feldes des Impulses zusammentreffen, eine Verformung des Rohres in Schraubenrichtung stattfindet und hierdurch eine Ultraschallwelle entsteht, die sich mit Schallgeschwindigkeit in Richtung der beiden Enden des Rohres ausbreitet. Die Laufzeit der Ultraschallwelle von dem Entstehungsort, die mit der Position des Magnets übereinstimmt, bis zu dem Ende des Rohres, an dem der UltraschallAufnehmer angeordnet ist, ist proportional zu dem Abstand zwischen diesen beiden Orten. Die Zeit, die der elektrische Impuls von dem Impulsgenerator bis zu dem Ort des Positionsmagnets benötigt, ist vernachlässigbar klein, da die hinlaufende elektrische Welle sich mit Lichtgeschwindigkeit fortpflanzt.

Diese Meßvorrichtung ist geeignet, durch die Proportionalität zwischen der Laufzeit der Ultraschallwelle und dem Abstand des Positionsmagnets zu dem Befestigungsort des Impulsgenerators die absolute Position des Positionsmagnets zu ermitteln. Diese Meßeinrichtung ist im Stand der Technik nur in Verbindung mit der Verwendung von einem einzigen Positionsmagneten bekannt und ist somit in ihrem Meßbereich auf die Länge des Meßbereichs des als Meßwertaufnehmer dienenden magnetostriktiven Rohres beschränkt. Derartige Meßwertaufnehmer weisen erfahrungsgemäß eine Länge von etwa 150 - 3500 mm auf.

Ausgehend von diesem Stand der Technik liegt der Erfindung die Aufgabe zugrunde, eine Meßvorrichtung zum berührungslosen Bestimmen des zurückgelegten Weges und der Geschwindigkeit von entlang einer Fahrstrecke bewegten Elementen zu schaffen, die eine hohe Auflösung aufweist und insbesondere geeignet ist für berührungslos angetriebene Schienenfahrzeuge.

Erfindungsgemäß wird durch die Ausbildung des Meßwertaufnehmers als Ultraschallwegmesser, der seine Positionssignale von einer Vielzahl entlang einer Fahrstrecke eines bewegten Elements angeordneten und voneinander beabstandeten Positionsgebem erhält, wobei der Abstand zweier benachbarter Positionsgeber zueinander kleiner ist als die wirksame Meßlänge des Ultraschallwegmessers, erreicht, daß der Meßbereich des aus dem Stand der Technik bekannten Ultraschallwegmessers beliebig erweitert werden kann. Dieser Ultraschallwegmesser besteht im wesentlichen aus einem Rohr aus magnetostriktivem Material, an dem an einem Ende ein Ultraschallaufnehmer angekoppelt ist, aus einem Impulsgenerator, der mit einem durch das Rohr geführten Leiter verbunden ist, sowie aus einer Meßschaltung zur Ermittlung der Position des Positionsgebers aus den Meßwerten des Ultraschallaufnehmers. Das Rohr ist hierbei im wesentlichen in Bewegungsrichtung des bewegten Elements ausgerichtet. Das Meßprinzip beruht auf der Auswertung des zeitlichen Abstandes zwischen dem Auftreten eines elektrischen Impulses des Impulsgebers und dem Empfang einer Ultraschallwelle im Ultraschallaufnehmer. Die Ultraschallwelle entsteht an der Position des Zusammentreffens der Felder des elektrischen Impulses und des Positionsgebers durch eine Veränderung der Kristallstruktur des magnetostriktiven Materials.

Die erfindungsgemäße Meßvorrichtung macht sich die Erkenntnis zunutze, daß für den Fall, daß zwei Positionsgeber im Bereich der wirksamen Meßlänge sich befinden, die Meßschaltung des Ultraschallaufnehmers nur die erste Ultraschallwelle meßtechnisch auswertet, die durch den zugeordneten elektrischen Impuls erzeugt wurde.

Als vorteilhaft erweist sich, den Ultraschallaufnehmer an dem in Bewegungsrichtung des bewegten Elements gesehen vorderen Ende des Rohres anzuordnen, so daß die sich im Rohr fortpflanzende Ultraschallwelle dem bewegten Element entgegenläuft, da hierdurch sich ein Sprung im Wegsignal ereignet, wenn ein Positionsgeber in die aktive Meßlänge des magnetostriktiven Rohres eintritt. Für Anwendungsfälle in fördertechnischen Anlagen ist es häufig günstiger zu wissen, zu welchem Zeitpunkt ein Förderelement in den Meßbereich eintritt, als bei umgekehrter Anordnung des Ultraschallaufnehmers das Verlassen des Meßbereiches durch das Förderelement mit einem Sprung im Wegsignal zu registrieren. Dieser Sprung im Wegsignal kann meßtechnisch als Zählgröße ausgewertet werden, wobei bei bekannten Abständen zwischen den benachbarten Positionsgebem der zurückgelegte Weg bestimmt werden kann und durch Differentiation der Wegsignale die Geschwindigkeit.

Besonders geeignet ist die erfindungsgemäße Vorrichtung für den Einsatz bei berührungslos angetriebenen Schienenfahrzeugen in fördertechnischen Anlagen, da hierbei nicht wie sonst üblich die Drehzahlen der Antriebe zur Weg- und Geschwindigkeitsbestimmung herangezogen werden können. Für den Einsatz bei Sortierförderanlagen, die im wesentlichen aus einer Vielzahl von einzelnen Wagen gebildet ist, die in einer endlosen Kette auf einer geschlossenen Förderbahn umlaufen, ist es vorteilhaft, die Positionsgeber an den verfahrbaren Wagen und den Meßwertaufnehmer an den Schienen der Fahrstrecke anzuordnen, da hierdurch die Übertragung der Meßsignale von dem Meßwertaufnehmer in die Auswerteeinheit erleichtert wird. Für den Einsatz der erfindungsgemäßen Meßvorrichtung mit Schienenfahrzeugen, die als Einzelfahrzeuge auf den Schienen verfahrbar sind, ist eine Anordnung des Meßwertaufnehmers an dem Fahrzeug vorgesehen.

Die Ausbildung der Positionsgeber als Permanentmagnete erweist sich als kostengünstige Lösung, die gleichzeitig in dem Meßwertaufnehmer zu ausreichenden Kristallstrukturveränderungen führt, um eine meßbare Ultraschallwelle entstehen zu lassen.

Des weiteren erweist sich als vorteilhaft, in dem Rohr aus magnetostriktivem Material einen Leiter zur Übertragung des elektrischen Impulses vorzusehen.

Nachfolgend wird die Erfindung anhand eines Ausführungsbeispieles und Zeichnungen näher erläutert. Es zeigen:
- Figur 1: eine schematische Darstellung einer Sortiervorrichtung mit einer erfindungsgemäßen Meßvorrichtung,
- Figur 2: eine schematische Ansicht der erfindungsgemäßen Meßvorrichtung,
- Figur 3: ein Weg/Geschwindigkeits-Zeitdiagramm der Meßsignale des Meßwertaufnehmers.

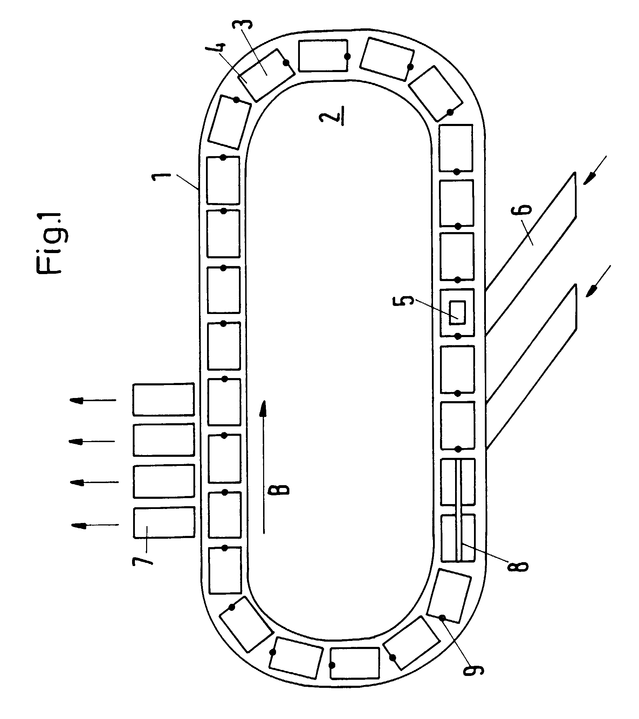

Die Figur 1 zeigt eine schematische Darstellung einer Sortierförderanlage mit einem auf einer weitestgehend ovalen Fahrstrecke 1 verfahrbaren Schienenfahrzeug 2. Das Schienenfahrzeug 2 besteht aus einer Vielzahl von Wagen 3, die zu einer endlosen Kette aneinandergekoppelt sind. Jeder Wagen 3 hat eine Transportfläche für Fördergut 5, die aus einem quer zur Bewegungsrichtung B des Schienenfahrzeugs 2 antreibbaren Förderband 4 gebildet ist. Derartig ausgebildete Sortierförderer werden auch als Crossbeltsorter bezeichnet. Anstatt den Förderbändem 4 können auf den Wagen 3 auch kippbare Plattformen zum Ausschleusen des Fördergutes 5 verwendet werden. Dieser Sortierförderanlage sind jeweils angrenzend Zuführbahnen 6 und Ausschleusbahnen 7 für das Fördergut 5 zugeordnet. Um ein zielgenaues Ausschleusen des Förderguts 5 von dem Förderband 4 der Sortierförderanlage in eine vorgewählte Ausschleusbahnen 7 zu erreichen, ist neben Angaben über Art, Beschaffenheit und Zielort des Förderguts 5 auch die Kenntnis der genauen Geschwindigkeit und der Position der einzelnen Wagen 3 mit den Förderbändem 4 bzw. deren zurückgelegter Weg ausgehend von einem Referenzpunkt erforderlich. Im vorliegenden Fall erfolgt die Bestimmung des zurückgelegten Weges und somit der Position und der Geschwindigkeit der einzelnen Wagen 3 durch einen ortsfest an der Fahrstrecke 1 angeordneten Meßwertaufnehmer 8, der mit Positionsgebem 9, die als Magnete ausgebildet sind, zusammenwirkt. Als Magnete werden vorzugsweise Permanentmagnete verwendet. Ein Einsatz von Elektromagneten ist auch möglich. Die Positionsgeber 9 sind jeweils an dem in Bewegungsrichtung B gesehenen vorderen Ende eines jeden Wagens 3 angeordnet. Der Meßwertaufnehmer 8 ist mit seiner Längserstreckung in Bewegungsrichtung B des Sortierförderers ausgerichtet.

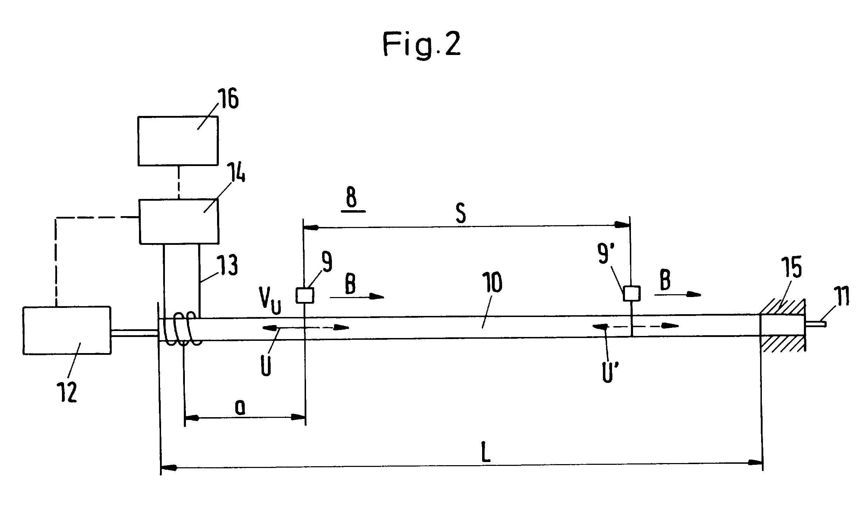

In Figur 2 ist der schematische Aufbau des Meßwertaufnehmers 8 und der mit diesem in Verbindung stehenden Auswerteelektronik dargestellt. Der Meßwertaufnehmer 8 besteht im wesentlichen aus einem Rohr 10, das aus magnetostriktivem Material hergestellt ist. Durch das Rohr 10 ist ein vorzugsweise aus Kupfer bestehender Leiter 11 hindurchgeführt. Der Leiter 11 ist mit einem Impulsgeber 12 zur Erzeugung eines elektrischen Impulses verbunden. An einem Ende des Rohres 10 ist ein Ultraschallaufnehmer 13, der vorzugsweise als Spule ausgebildet ist, angekoppelt. Der Ultraschallaufnehmer 13 und der Impulsgeber 12 sind mit einer Meßschaltung 14 verbunden.

Das Meßprinzip der vorliegenden Meßeinrichtung beruht auf der Ausnutzung der Eigenschaften des magnetostriktiven Werkstoffes des Rohres 10. Derartige Werkstoffe können beim Anliegen eines Magneffeldes ihre Kristallstruktur reversibel verändern. Im vorliegenden Fall wird diese Eigenschaft dazu benutzt, um den Abstand a zwischen einem Positionsgeber 9 und dem Ultraschallaufnehmer 13 zu bestimmen. Ein derartiger Meßvorgang läuft wie folgt ab.

In dem Impulsgenerator 12 wird ein elektrischer Impuls erzeugt, der durch den Leiter 11 läuft. Das von dem elektrischen Impuls erzeugte Feld führt beim Zusammentreffen mit dem magnetischen Feld des Positionsgebers 9 zu einer schraubenförmigen Verformung der Kristallstruktur des Rohres 10. Hierdurch entsteht eine Ultraschallwelle, die sich mit Schallgeschwindigkeit in Richtung der beiden Enden des Rohres 10 ausbreitet. Die Laufzeit der Ultraschallwelle von dem Ort ihrer Entstehung im Bereich des Positionsgebers 9 bis zu dem am Ende des Rohres 10 angekoppelten Ultraschallaufnehmer 13 ist direkt proportional zu dem Abstand a zwischen dem Entstehungsort und dem Ultraschallaufnehmer 13. Die Zeit, die der elektrische Impuls für den Weg von dem Impulsgenerator 12 bis zu dem Ort des Positionsgebers 9 benötigt, kann vernachlässigt werden, da sich die hinlaufende elektrische Welle mit Lichtgeschwindigkeit fortpflanzt.

In der vorliegenden Figur 2 ist der Fall dargestellt, daß sich zwei Positionsgeber 9, 9' im Bereich der wirksamen Meßlänge L des Rohres 10 befinden. Somit führt der von dem Impulsgenerator 12 erzeugte elektrische Impuls zur Bildung von zwei Ultraschallwellen U, U' in den Bereichen der Positionsgeber 9 und 9'. Die erste von dem Positionsgeber 9 stammende Ultraschallwelle U wird von dem Ultraschallaufnehmer 13 aufgenommen und von der Meßschaltung 14 verarbeitet. Die aufgrund der längeren Laufzeit später an dem Ultraschallaufnehmer 13 eintreffende Ultraschallwelle U' wird zwar von dem Ultraschallaufnehmer 13 erfaßt, jedoch von der Meßschaltung 14 nicht mehr zu einem Positionssignal weiterverarbeitet, da nur bezogen auf einen elektrischen Impuls des Impulsgenerators 12 die erste Ultraschallwelle U zu einem Positionssignal weiterverarbeitet wird. Somit ist gewährleistet, daß obwohl sich zwei Positionsgeber 9, 9' im Bereich der Meßlänge L des Rohres 10 befinden, ein eindeutiges Positionssignal erhalten wird. Es ist auch möglich, beide Ultraschallwellen U, U' weiterzuverarbeiten. Die zu dem dem Ultraschallaufnehmer 13 abgewandten Ende laufenden Ultraschallwellen U, U' werden von einem Dämpfungsglied 15 aufgenommen, damit keine rücklaufenden Ultraschallwellen das Meßergebnis stören. Das Dämpfungsglied 15 ist beispielsweise aus mehreren Scheiben aus elastischem Material aufgebaut, die das Rohr 10 von außen fest umschließen und somit die Ultraschallwelle durch die feste Einspannung des Rohres 10 und die dadurch resultierende Verformung des Dämpfungsglied 15 in Wärme umsetzen. Die von der Meßschaltung 14 von dem Ultraschallaufnehmer 13 erhaltenen Positionssignale werden in der vom Impulsgenerator 12 vorgegebenen Frequenz an die Auswerteeinheit 16 weitergegeben. In der Auswerteeinheit 16 wird aus den Positionssignalen bei gleichzeitig bekannten Abständen s der jeweils benachbarten Positionsgeber 9, 9' der zurückgelegte Weg und durch Differentiation der Wegsignale die Geschwindigkeit bestimmt.

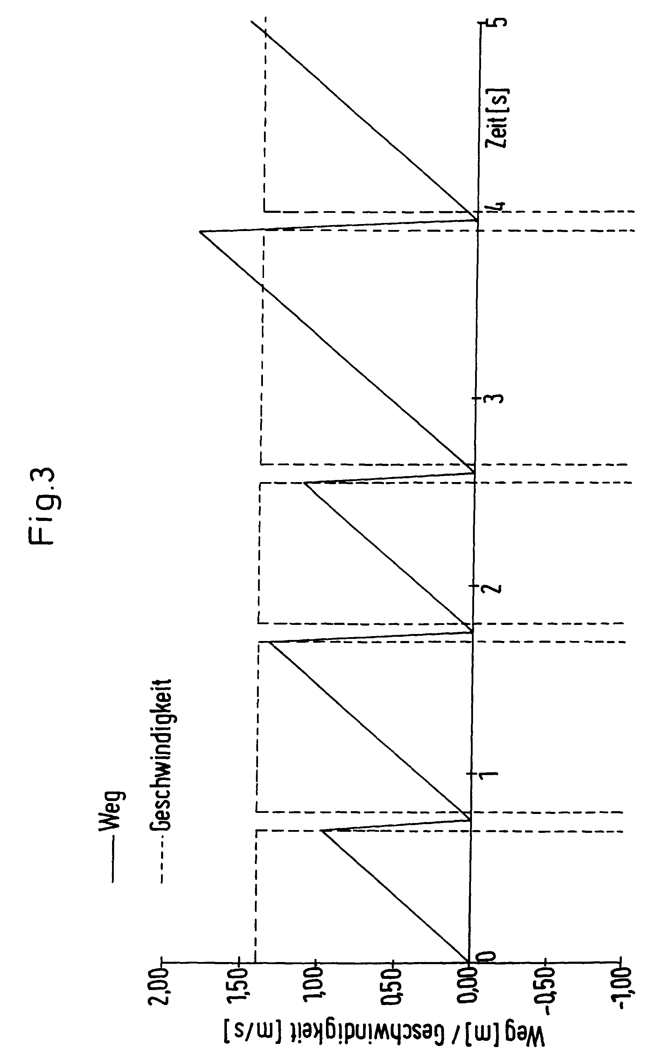

In Figur 3 sind in einem Weg/Geschwindigkeits-Zeitdiagramm die Weg- und Geschwindigkeitssignale der Auswerteeinheit 16 dargestellt. Die Darstellung ist so gewählt, daß bei dem Zeitpunkt 0 ein Positionsgeber 9 gerade in die wirksame Meßlänge L des Meßwertaufnehmers 8 eintritt. Es ist ersichtlich, daß das Wegsignal bei konstanter Geschwindigkeit des Schienenfahrzeugs 2 linear ansteigt bis zu dem Zeitpunkt, an dem ein weiterer Positionsgeber 9 in die wirksame Meßlänge L des Meßwertaufnehmers 8 eintritt. Zu diesem Zeitpunkt fällt das Wegsignal rapide ab, da der bisherige Positionsgeber 9 nicht mehr von der Meßschaltung 14 ausgewertet wird, sondern der weitere Positionsgeber mit dem absolut geringeren Wegsignal. In diesem Übergangsbereich zwischen zwei Positionsgebem 9 ergibt sich für das Geschwindigkeitssignal ein scharfer negativer Peak. Die Wegsignale weisen unterschiedliche, absolute Beträge auf, da die Abstände s der Positionsgeber 9, 9' zueinander unterschiedlich sind.

Die Sprünge des Wegsignals macht sich die Auswerteeinheit 16 zunutze, um den zurückgelegten Weg und die Geschwindigkeit des Schienenfahrzeugs 2 zu bestimmen. Die Sprünge werden bei positiver Geschwindigkeit in einem Zähler der Auswerteeinheit 16 aufaddiert bzw. bei negativer Geschwindigkeit wird der Zähler heruntergesetzt. Bei konstanten Abständen zwischen den Positionsgebem 9, 9' kann anhand des Wertes des Zählers der Abstand s zwischen den benachbarten Positionsgebem 9, 9' und unter Hinzunahme des aktuellen Wegsignals die genaue Position des Schienenfahrzeugs 2 bestimmt werden. Für den Fall, daß die Abstände s zwischen den Positionsgebem 9, 9' nicht konstant sind, muß ein Referenzpositionsgeber 9, 9' bestimmt werden und von diesem ausgehend die Abstände s zwischen den Positionsgebem 9, 9' in der Auswerteeinheit 16 hinterlegt werden, damit jedem Zählimpuls der zugehörige Abstand s zugeordnet werden kann. Durch eine Differentiation des Wegsignals kann die Geschwindigkeit des Schienenfahrzeugs 2 in der Auswerteeinheit 16 ermittelt werden.

Des weiteren ist es sinnvoll, um nicht beliebig große Zählwerte zu erhalten, insbesondere bei geschlossenen Fahrstrecken den Zähler bei einer definierten Referenzlage auf einen Ausgangswert, z.B. auf 0, zu setzen.

### Bezugszeichenliste

- 1: Fahrstrecke
- 2: Schienenfahrzeug
- 3: Wagen
- 4.: Förderband
- 5: Fördergut
- 6: Zuführbahn
- 7: Ausschleusbahn
- 8: Meßwertaufnehmer
- 9, 9': Positionsgeber
- 10: Rohr
- 11: Leiter
- 12: Impulsgeber
- 13: Ultraschallaufnehmer
- 14: Meßschaltung
- 15: Dämpfungsglied
- a: Abstand
- 16: Auswerteeinheit
- B: Bewegungsrichtung
- L: Meßlänge
- c,s: Abstand
- U, U': Ultraschallwelle

## Patentansprüche

1. Meßvorrichtung zum berührungslosen Bestimmen des zurückgelegten Weges und der Geschwindigkeit von entlang einer Fahrstrecke bewegten Elementen, insbesondere von berührungslos angetriebenen Schienenfahrzeugen in fördertechnischen Anlagen, mit zumindest einem Meßwertaufnehmer und einem Positionsgeber, von denen jeweils einer an der Fahrstrecke und einer an dem Element angeordnet sind und einer Auswerteeinheit zur Bestimmung der Weges aus den Signalen des Meßwertaufnehmers und der Geschwindigkeit aus den zeitlichen Veränderungen der Wegsignale,
dadurch gekennzeichnet,
daß der Meßwertaufnehmer (8) als Ultraschallwegmesser ausgebildet ist, der im wesentlichen aus einem in Bewegungsrichtung (B) des bewegten Elements (Schienenfahrzeug 2) ausgerichteten Rohr (10) aus magnetostriktivem Material, einem an einem Ende des Rohres (10) angeordneten Impulsgeber (12), einem an einem Ende des Rohres (10) angekoppelten Ultraschallaufnehmer (13), sowie aus einer Meßschaltung (14) zur Ermittlung der Position des Positionsgebers (9, 9') als Funktion des zeitlichen Abstandes zwischen dem Auftreten eines elektrischen Impulses des lmpulsgebers (12) und dem Empfang von einer an der Position des Zusammentreffens der Felder des elektrischen Impulses und des Positionsgebers (9, 9') durch Veränderung der Kristallstruktur des magnetostriktiven Materials erzeugten Ultraschallwelle gebildet ist, daß die Positionsgeber (9, 9') als Magnete ausgebildet sind und daß das Rohr (10) eine wirksame Meßlänge (c) aufweist, die größer ist als der Abstand (a) zweier benachbarter Positionsgeber (9, 9').

2. Meßvorrichtung nach Anspruch 1,
dadurch gekennzeichnet,
daß die Meßschaltung (14) derart ausgebildet ist, daß für den Fall, daß mehr als ein Positionsgeber (9, 9') im Bereich- der wirksamen Meßlänge (c) des Rohres (10) ausschließlich die erste von einem elektrischen Impuls ausgelöste Ultraschallwelle von dem Ultraschallaufnehmer (13) zur Ermittlung der Position des Positionsgebers verarbeitet wird.

3. Meßvorrichtung nach Anspruch 2,
dadurch gekennzeichnet,
daß der Ultraschallaufnehmer (13) an dem in Bewegungsrichtung (B) des bewegten Elements (Schienenfahrzeug 2) gesehen vorderen Ende des Rohres (10) angeordnet ist, so daß die sich im Rohr (10) fortpflanzende Ultraschallwelle dem bewegten Element (Schienenfahrzeug 2) entgegenkommt.

4. Meßvorrichtung nach Anspruch 2 oder 3,
dadurch gekennzeichnet,
daß das bewegte Element ein Schienenfahrzeug (2) ist, das aus einer endlosen Kette von Wagen (3), die auf einer geschlossenen Fahrstrecke (1) verfahrbar sind, gebildet ist, daß der Meßwertaufnehmer (8) ortsfest und die Positionsgeber (9, 9') an dem Schienenfahrzeug (2) angeordnet sind.

5. Meßvorrichtung nach einem der Ansprüche 1 bis 3,
dadurch gekennzeichnet,
daß das bewegte Element ein schienenverfahrbares Einzelfahrzeug ist und daß der Meßwertaufnehmer (8) an dem Schienenfahrzeug und die Positionsgeber (9, 9') an der Fahrstrecke (1) angeordnet sind.

6. Meßvorrichtung nach einem der Ansprüche 1 bis 5,
dadurch gekennzeichnet,
daß die Positionsgeber (9, 9') als Permanentmagnete ausgebildet sind.

7. Meßvorrichtung nach einem der Ansprüche 1 bis 6,
dadurch gekennzeichnet,
daß der Impulsgeber (12) mit einem Leiter (11) verbunden ist, der durch das Rohr (10) hindurchgeführt ist.
